# EUROPEAN PATENT APPLICATION

(11) **EP 4 748 648 A1**
(43) Date of publication of application: **27.05.2026**
(21) Application number: 25213635.3
(22) Date of filing: 05.11.2025
(51) Int. Cl.: B60Q 1/14

(54) **LIGHT DISTRIBUTION CONTROL APPARATUS, CONTROL METHOD OF LIGHT DISTRIBUTION CONTROL APPARATUS, AND LIGHT DISTRIBUTION CONTROL PROGRAM**

(30) Priority: 20.11.2024 JP 2024202261
(71) Applicant: TOYOTA JIDOSHA KABUSHIKI KAISHA, Toyota-shi Aichi 471-8571 (JP)
(72) Inventor: IKUTA, Tetsuya, Toyota, 471-8571 (JP)
(74) Representative: J A Kemp LLP

(57) **Abstract**

An irradiation control region of a headlight (3) including a first region (R1) including a vehicle (V) in front of the vehicle and a second region (R2) not including a front vehicle in a periphery of the first region is set, based on a front captured image (IM). A set light intensity of the headlight is set based on the irradiation control region. Light distribution of the headlight (3) is controlled based on the irradiation control region and the set light intensity. A size of a blur region (R3) surrounding the first region on a first region side in the second region is set, based on a user setting parameter or a user operation of a user of the vehicle. A first light intensity of the first region, a second light intensity of the second region that is higher than the first light intensity, and a third light intensity of the blur region that increases from the first light intensity to the second light intensity as a distance from the first region increases are set.

## Description

### TECHNICAL FIELD

The present invention relates to a light distribution control apparatus, a control method of a light distribution control apparatus, and a light distribution control program.

### BACKGROUND

In the related art, as a technique relating to light distribution control, a method is known in which a high beam pattern having a first zone is projected, and a predetermined number of pixels are provided on each of four sides of an edge of the first zone, thereby generating upper, lower, left, and right blur zones (for example, Japanese Patent No. 7275279).

The blur zones as in the related art are visually recognized by various users such as a driver. According to various survey results, users' preferences may vary widely regarding a degree of blurriness.

Therefore, there is room for improvement in order to achieve less unnatural light distribution of a headlight.

### SUMMARY

An aspect of the present invention is a light distribution control apparatus controlling light distribution of a headlight irradiating a region in front of a vehicle, the light distribution control apparatus including: a region setter configured to set an irradiation control region of the headlight including a first region including a front vehicle in a front direction of the vehicle and a second region not including the front vehicle in a periphery of the first region, based on a front captured image of an on-board camera of the vehicle; a light intensity setter configured to set a set light intensity of the headlight based on the irradiation control region; and a lighting controller configured to control the light distribution of the headlight based on the irradiation control region and the set light intensity, in which the region setter is configured to set a size of a blur region surrounding the first region on a first region side in the second region, based on a user setting parameter or a user operation of a user of the vehicle, and the light intensity setter is configured to set a first light intensity of the first region, a second light intensity of the second region that is higher than the first light intensity, and a third light intensity of the blur region that increases from the first light intensity to the second light intensity as a distance from the first region increases.

In the light distribution control apparatus according to the aspect of the present invention, the region setter is configured to set the size of the blur region surrounding the first region on the first region side in the second region, based on the user setting parameter or the user operation of the user of the vehicle. At least the size of the blur region can be adjusted according to the user setting parameter or the user operation. Therefore, it is easier for the user to feel the light distribution to be less unnatural as compared to when the size of the blur region is constant. Therefore, the light distribution control apparatus according to the aspect of the present invention makes it possible to control the light distribution of the headlight for the user to feel the light distribution is less unnatural.

In one example, the region setter may be configured to acquire selection information corresponding to a selection operation of the user to set the size of the blur region, as the user setting parameter or the user operation.

In one example, the region setter may be configured to set a size of the first region based on the user setting parameter or the user operation.

In one example, the region setter may be configured to acquire linked selection information corresponding to a linked selection operation of the user to set the size of the blur region and the size of the first region in a linked manner, as the user setting parameter or the user operation.

Another aspect of the present invention is a control method of a light distribution control apparatus controlling light distribution of a headlight irradiating a region in front of a vehicle, the control method including: a region setting step of, by the light distribution control apparatus, setting an irradiation control region of the headlight including a first region including a front vehicle in a front direction of the vehicle and a second region not including the front vehicle in a periphery of the first region, based on a front captured image of an on-board camera of the vehicle; a light intensity setting step of, by the light distribution control apparatus, setting a set light intensity of the headlight based on the irradiation control region; and a lighting control step of, by the light distribution control apparatus, controlling the light distribution of the headlight based on the irradiation control region and the set light intensity, in which, in the region setting step, a size of a blur region surrounding the first region on a first region side in the second region is set, based on a user setting parameter or a user operation of a user of the vehicle, and in the light intensity setting step, a first light intensity of the first region, a second light intensity of the second region that is higher than the first light intensity, and a third light intensity of the blur region that increases from the first light intensity to the second light intensity as a distance from the first region increases are set.

In the control method of a light distribution control apparatus according to another aspect of the present invention, the size of the blur region surrounding the first region on the first region side in the second region is set, based on the user setting parameter or the user operation of the user of the vehicle. At least the size of the blur region can be adjusted according to the user setting parameter or the user operation. Therefore, it is easier for the user to feel the light distribution to be less unnatural as compared to when the size of the blur region is constant. Therefore, the control method of the light distribution control apparatus according to another aspect of the present invention makes it possible to control the light distribution of the headlight for the user to feel the light distribution is less unnatural.

Still another aspect of the present invention is a light distribution control program for causing a computer to function as a light distribution control apparatus controlling light distribution of a headlight irradiating a region in front of a vehicle, the light distribution control program causing the computer to function as: a region setter configured to set an irradiation control region of the headlight including a first region including a front vehicle in a front direction of the vehicle and a second region not including the front vehicle in a periphery of the first region, based on a front captured image of an on-board camera of the vehicle; a light intensity setter configured to set a set light intensity of the headlight based on the irradiation control region; and a lighting controller configured to control the light distribution of the headlight based on the irradiation control region and the set light intensity, in which the region setter is configured to set a size of a blur region surrounding the first region on a first region side in the second region, based on a user setting parameter or a user operation of a user of the vehicle, and the light intensity setter is configured to set a first light intensity of the first region, a second light intensity of the second region that is higher than the first light intensity, and a third light intensity of the blur region that increases from the first light intensity to the second light intensity as a distance from the first region increases.

In the light distribution control program according to still another aspect of the present invention, the region setter is configured to set the size of the blur region surrounding the first region on the first region side in the second region, based on the user setting parameter or the user operation of the user of the vehicle. At least the size of the blur region can be adjusted according to the user setting parameter or the user operation. Therefore, it is easier for the user to feel the light distribution to be less unnatural as compared to when the size of the blur region is constant. Therefore, the light distribution control program according to still another aspect of the present invention makes it possible to control the light distribution of the headlight for the user to feel the light distribution is less unnatural.

According to some aspects of the present invention, it is possible to control the light distribution of the headlight for the user to feel the light distribution is less unnatural.

### BRIEF DESCRIPTION OF THE DRAWINGS

Fig. 1 is a block diagram illustrating a light distribution control apparatus according to one example.
Fig. 2A is a schematic diagram illustrating an example of a blur region.
Fig. 2B is a schematic diagram illustrating an example of a blur region larger than the example of Fig. 2A.
Fig. 2C is a schematic diagram illustrating an example of a blur region larger than the example of Fig. 2B.
Fig. 3 is a schematic diagram for describing an example of each vehicle angle of a front vehicle in a front captured image.
Fig. 4 is a schematic diagram illustrating an example of a first region including a front vehicle in a front captured image.
Fig. 5 is a schematic diagram illustrating a display example of a selection information acquirer.
Figs. 6A is a schematic diagram illustrating an example in which the first region or the second region is set by a height and a width.
Figs. 6B is a schematic diagram illustrating an example in which the first region or the second region is set by a height and a width.
Fig. 7 is a flowchart illustrating an example of processing of a light distribution control ECU of Fig. 1.
Fig. 8 is a flowchart illustrating an example of a setting process of an irradiation control region in Fig. 7.

### DETAILED DESCRIPTION

Hereinafter, an example of the present invention will be described with reference to the drawings.

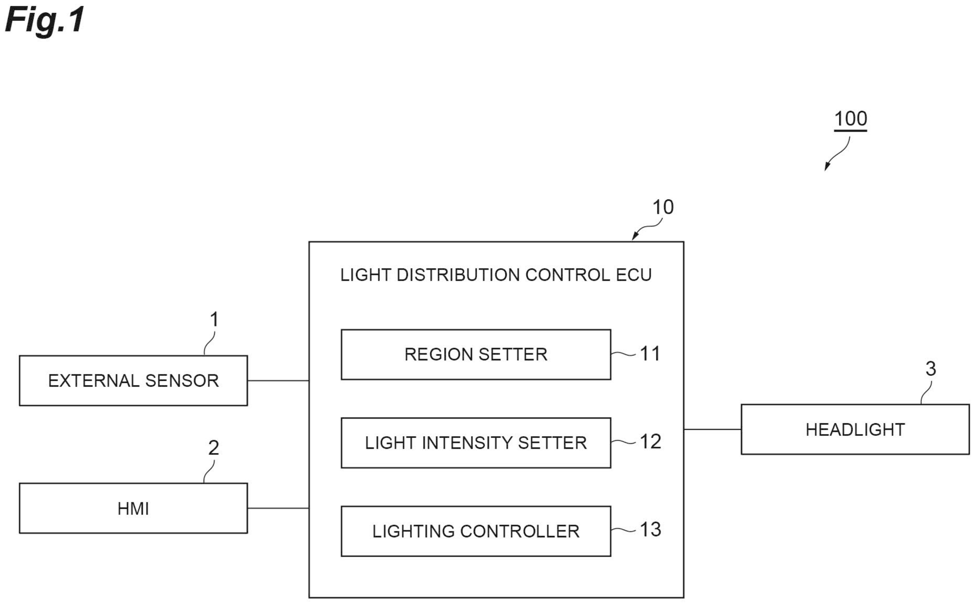

Fig. 1 is a block diagram illustrating a light distribution control apparatus according to one example. A light distribution control apparatus 100 is mounted on a vehicle such as a passenger car. The light distribution control apparatus 100 is an apparatus for controlling light distribution of a headlight irradiating a region in front of the vehicle. Some functions of the light distribution control apparatus 100 may be executed on a server communicable with the vehicle.

### [Configuration of Light Distribution Control Apparatus]

As shown in Fig. 1, the light distribution control apparatus 100 includes a light distribution control electronic control unit [ECU] 10. The light distribution control ECU 10 is an electronic control unit (computer) having a central processing unit [CPU], a read only memory [ROM], a random access memory [RAM], a controller area network [CAN] communication circuit, and the like. In the light distribution control ECU 10, for example, various functions are realized by loading the program stored in the ROM into the RAM and the CPU executing the program loaded in the RAM. The light distribution control ECU 10 may include a plurality of electronic units. The light distribution control ECU 10 includes the ROM and the RAM as storage. The light distribution control ECU 10 may include an electrically erasable programmable read-only memory [EEPROM] as storage.

The light distribution control apparatus 100 includes an external sensor 1, an HMI 2, and a headlight 3. The external sensor 1, the HMI 2, and the headlight 3 are connected to the light distribution control ECU 10.

The external sensor 1 is a detection device detecting surroundings of the vehicle. A front vehicle is included in the situation around the vehicle. The external sensor 1 includes a camera (on-board camera). The external sensor 1 may include a radar sensor. The camera is an imaging device imaging a situation in front of the vehicle. The camera is provided on a rear surface of an inner mirror (rear-view mirror) behind a windshield of the vehicle, for example, and images the front side of the vehicle. An optical axis of the camera coincides with a front-rear axis of the vehicle in a plan view of the vehicle, for example. Here, the front-rear axis is an axis passing through a center of the vehicle in a vehicle width direction and parallel to a ground contact surface of the vehicle. The camera transmits a front captured image related to the situation in front of the vehicle to the light distribution control ECU 10.

The radar sensor is a detection device that detects an object around the vehicle by using radio waves (for example, millimeter waves) or light. The radar sensor may include, for example, a millimeter wave radar or a light detection and ranging [LiDAR]. The radar sensor transmits information on the detected object to the light distribution control ECU 10.

The HMI 2 is an interface for performing input and output of information between the light distribution control ECU 10 and an occupant (user). The HMI 2 includes, for example, a display, an operation button, and the like provided in a vehicle cabin. The display may function as a touch panel. The display may be a center display, a display for navigation, or a head up display [HUD]. The HUD presents information to the occupant by projecting an image onto the windshield of the vehicle, or the like. The HMI 2 performs image output to the display in response to a control signal from the light distribution control ECU 10. The HMI 2 may function as a selection information acquirer that receives a selection operation (described later) by the occupant via the display as an operation button or a touch panel. The HMI 2 transmits selection information corresponding to the selection operation by the occupant to the light distribution control ECU 10.

The headlight 3 includes, for example, a left headlight provided at a left front end of the vehicle and a right headlight provided at a right front end of the vehicle. The left headlight and the right headlight are driving headlights having a high beam function. The left headlight and the right headlight may have a low beam function.

The headlight 3 is a light using an LED matrix as a light source. The LED matrix includes an LED group consisting of a plurality of LEDs. The LED group is two-dimensionally arranged at predetermined intervals in a horizontal direction and a vertical direction in a front view of the vehicle. The headlight 3 includes a high-definition LED matrix. The high-definition LED matrix can output a third light intensity of a blur region that increases from a first light intensity to a second light intensity, as will be described later.

### [Overview of Light Distribution Control]

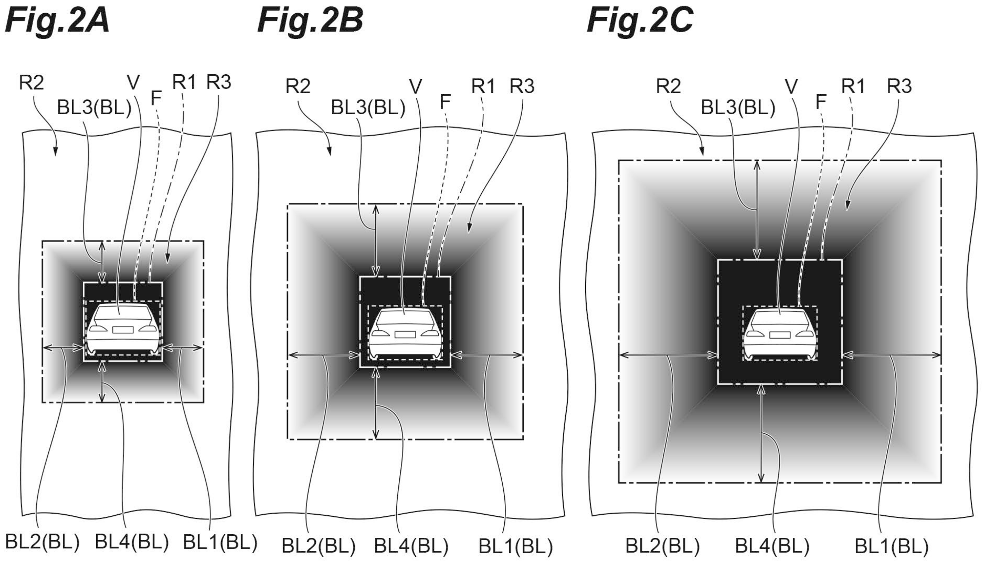

Fig. 2A is a schematic diagram illustrating an example of a blur region. Fig. 2B is a schematic diagram illustrating an example of a blur region larger than the example of Fig. 2A. Fig. 2C is a schematic diagram illustrating an example of a blur region larger than the example of Fig. 2B. Figs. 2A, 2B, and 2C each show an example of an irradiation control region of the headlight 3 with respect to a front vehicle seen from the vehicle.

The front vehicle is another vehicle present in a front direction of the vehicle. The front vehicle is, for example, a preceding vehicle V traveling in front of the vehicle in a traveling direction. The front vehicle may be an oncoming vehicle on an opposite lane in a front direction of the vehicle. The front vehicle may be a right or left turning vehicle traveling in a direction intersecting the traveling direction of the vehicle, in front of the vehicle in the traveling direction. The front vehicle is a control target of adaptive high-beam control. In the following description, a vehicle equipped with the light distribution control apparatus 100 and serving as a reference for the "front" of the front vehicle will be simply referred to as "vehicle".

As shown in Figs. 2A, 2B, and 2C, the light distribution control ECU 10 can execute adaptive high-beam control. The light distribution control ECU 10 independently controls turning on or off the LED groups of the left and right headlights for each LED. The light distribution control ECU 10 independently controls a current value supplied to the LED groups of the left and right headlights for each LED. When the light distribution control ECU 10 controls the LED group to be turned on, the LED group emits light to irradiate the front region of the vehicle.

The light distribution control ECU 10 includes a region setter 11, a light intensity setter 12, and a lighting controller 13.

The region setter 11 sets the irradiation control region of the headlight 3 including the first region and the second region based on a detection result of the external sensor 1. The adaptive high-beam control is a control of controlling light distribution (high beam light distribution) of the headlight 3 such that an illuminance of a first region R1 including the preceding vehicle V is lower than an illuminance of a second region R2 not including the preceding vehicle V in a periphery of the first region R1. The first region R1 is a region for reducing glare to the preceding vehicle V. The first region R1 is a so-called "dimming region" or "shielding region". The second region R2 is a region irradiated by the headlight 3 that is brighter than the first region R1 including the preceding vehicle V.

The region setter 11 sets a size of a blur region R3 surrounding the first region R1 on a first region R1 side in the second region R2 based on a user setting parameter or a user operation of an occupant of the vehicle, as will be described in detail later. The blur region R3 is provided on the first region R1 side in the second region R2 to surround the first region R1. The blur region R3 is a region in which a light intensity (illuminance) of light emitted from the headlight 3 to the front of the vehicle is gradually changed by preventing a sudden change in a set light intensity of the headlight 3 between the first light intensity and the second light intensity. Such an illuminance in the blur region R3 is realized by setting the set light intensity of the headlight 3, which is the high-definition LED matrix, to the third light intensity so as to increase from the first light intensity to the second light intensity as the distance from the first region R1 increases. That is, blurring of light due to diffusion of light caused by lens cut of the headlight 3 and blurring of light due to natural diffusion of light of the headlight 3 when the set light intensity is suddenly changed between the first light intensity and the second light intensity are different from a change in light in the blur region R3.

The setting of the size of the blur region R3 is, for example, a setting switchable in a plurality of stages such as "blurry", "intermediate", and "sharp". For example, the size of the blur region R3 in Fig. 2A corresponds to the "sharp" stage. The size of the blur region R3 in Fig. 2B corresponds to the "intermediate" stage. The size of the blur region R3 in Fig. 2C corresponds to the "blurry" stage. The size of the blur region R3 corresponding to the "intermediate" stage is larger than the size of the blur region R3 corresponding to the "sharp" stage. The size of the blur region R3 corresponding to the "blurry" stage is larger than the size of the blur region R3 corresponding to the "intermediate" stage.

The setting of the size of the blur region R3 may be in five stages further including a "slightly blurry" stage and a "slightly sharp" stage. The size of the blur region R3 corresponding to the "slightly sharp" stage is larger than the size of the blur region R3 corresponding to the "sharp" stage. The size of the blur region R3 corresponding to the "intermediate" stage is larger than the size of the blur region R3 corresponding to the "slightly sharp" stage. The size of the blur region R3 corresponding to the "slightly blurry" stage is larger than the size of the blur region R3 corresponding to the "intermediate" stage. The size of the blur region R3 corresponding to the "blurry" stage is larger than the size of the blur region R3 corresponding to the "slightly blurry" stage.

The setting of the size of the blur region R3 is not limited to the examples, and the size of the blur region R3 may be switchable in other numbers of stages or may be continuously switchable.

The light intensity setter 12 sets the set light intensity of the headlight 3 based on the set irradiation control region. The light intensity setter 12 sets the first light intensity of the first region R1, the second light intensity of the second region R2, and the third light intensity of the blur region R3. The set light intensity of the headlight 3 is a set value corresponding to each portion of the irradiation control region of a light intensity of the LED matrix of the headlight 3. Here, for simplification of the description, the set light intensity of the headlight 3 is expressed as a percentage.

The first light intensity of the first region R1 is, for example, a set light intensity of 0% (shielding light). The second light intensity of the second region R2 is higher than the first light intensity and is, for example, a set light intensity of 100%. The set light intensity of 100% means that, in the LED group responsible for irradiation to the second region R2, each LED is uniformly set to a maximum brightness within a predetermined rated brightness range.

The light intensity setter 12 sets the third light intensity of the blur region R3 based on a user setting parameter or a user operation of the occupant of the vehicle, as will be described in detail later. The third light intensity of the blur region R3 is the set light intensity of the headlight 3 that increases from the first light intensity to the second light intensity. The third light intensity may be, for example, a set value of a light intensity that gradually increases from 0% to 100%. A set light intensity higher than 0% and less than 100% is a set value of a light intensity in which each LED is not uniformly but partially turned on or off in the LED group responsible for irradiating the blur region R3. The third light intensity may be a set light intensity that monotonically increases from the first light intensity to the second light intensity. The third light intensity may be a set light intensity including a portion in which the light intensity is constant or a portion in which the light intensity decreases during the increase from the first light intensity to the second light intensity.

The lighting controller 13 controls the light distribution of the headlight 3 based on the irradiation control region and the set light intensity. The lighting controller 13 selects an LED group for turning on or off in the LED matrix of the headlight 3 with the set light intensity set according to each portion of the irradiation control region. The lighting controller 13 executes the adaptive high-beam control by turning on or off the selected LED group.

The lighting controller 13 can select the LED group to be turned off as the first light intensity of the first region R1 based on, for example, shielding horizontal angles θrt and θLt and shielding vertical angles θut and θdt calculated by providing a shielding size margin around a front vehicle region F as in an example described later, such that the LED group corresponds to an inside of an outer edge of the first region R1 in a front captured image IM.

The lighting controller 13 can select the LED group to be turned on as the second light intensity of the second region R2 based on the above-described shielding horizontal angles θrt and θLt and shielding vertical angles θut and θdt corresponding to the outer edge of the first region R1 and a blurriness size angle value, such that the LED group corresponds to an outside of a range expanded from the outer edge of the first region R1 in the front captured image IM by the blurriness size angle value.

The lighting controller 13 can select the LED group to be partially turned on or off as the third light intensity of the blur region R3 based on the above-described shielding horizontal angles θrt and θLt and shielding vertical angles θut and θdt corresponding to the outer edge of the first region R1 and the blurriness size angle value, such that the LED group corresponds to the inside of the range expanded from the outer edge of the first region R1 in the front captured image IM by the blurriness size angle value. The LED groups are partially turned on or off rather than uniformly turned on or off, whereby the headlight 3 emits light at a brightness corresponding to the third light intensity of the blur region R3. By using the high-definition LED, the irradiation light of the headlight 3 in a range corresponding to the blur region R3 in front of the vehicle can be blurred to have an illuminance corresponding to the third light intensity.

### [Setting of Irradiation Control Region]

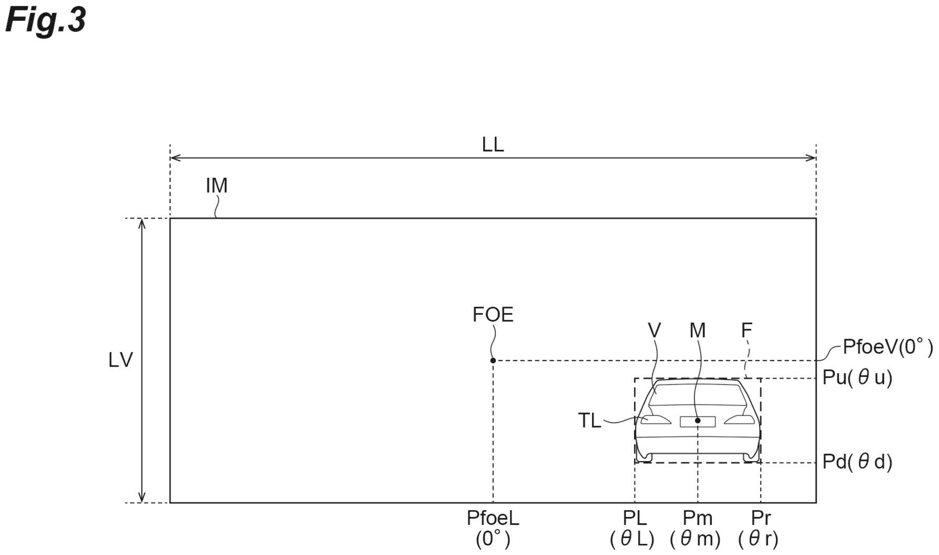

A specific example of the setting of the irradiation control region by the region setter 11 will be described. Fig. 3 is a schematic diagram for describing an example of each vehicle angle of a front vehicle in a front captured image. Fig. 3 is a diagram illustrating a front captured image IM when a tail lamp TL, which is a light source of the preceding vehicle V, is imaged by the camera. For example, in the front captured image captured at night, the body of the preceding vehicle V may not be clearly shown in practice, but in Fig. 3, the body of the preceding vehicle V is shown for convenience of description.

The region setter 11 acquires the front captured image IM based on the detection result of the external sensor 1 and recognizes the preceding vehicle V in the front captured image IM. The region setter 11 calculates a vehicle angle of the recognized preceding vehicle V. The vehicle angle of the preceding vehicle V is a relative angle representing a position of the preceding vehicle V as viewed from the vehicle with a predetermined direction as a reference. In the example of Fig. 3, the vehicle angle includes a right vehicle angle θr, a left vehicle angle θL, a center vehicle angle θm, an upper vehicle angle θu, and a lower vehicle angle θd.

The right vehicle angle θr is a horizontal angle corresponding to a right end of the preceding vehicle V with the front-rear axis of the vehicle as a reference. The horizontal angle is an angle in a horizontal direction with the front-rear axis of the vehicle as a reference. The left vehicle angle θL is a horizontal angle corresponding to a left end of the preceding vehicle V with the front-rear axis of the vehicle as a reference. The center vehicle angle θm is a horizontal angle of the center of the preceding vehicle V in the horizontal direction with respect to the front-rear axis. The upper vehicle angle θu is a vertical angle corresponding to an upper end of the preceding vehicle V with the front-rear axis of the vehicle as a reference. The vertical angle is an angle in the vertical direction with the front-rear axis of the vehicle as a reference. The lower vehicle angle θd is a vertical angle corresponding to a lower end of the preceding vehicle V with the front-rear axis of the vehicle as a reference.

As a specific example of the calculation of the vehicle angle, the region setter 11 detects the light source based on the front captured image IM. The light source includes ambient light and light from other vehicles. The ambient light is light from streetlights, buildings, and the like. The light from other vehicles is light from the preceding vehicle V. In the example of Fig. 3, the light from other vehicles is, for example, light from the tail lamp TL of the preceding vehicle V. The light from other vehicles may be a headlight of an oncoming vehicle. The region setter 11 recognizes a type (ambient light or light from other vehicles) of the detected light source by a well-known method.

The region setter 11 calculates a front vehicle region F, which is a region surrounding the preceding vehicle V, in the front captured image IM based on the light source of the preceding vehicle V detected from the front captured image IM, for example. An outer edge of the front vehicle region F has a shape that surrounds the preceding vehicle V (control target rectangular end). The shape of the front vehicle region F may be, for example, a rectangular shape and may include a set of sides extending in the horizontal direction and a set of sides extending in the vertical direction. In the following description, a position of any point in the front captured image IM in the horizontal direction is referred to as a "horizontal position", and a position of the point in the vertical direction is referred to as a "vertical position".

The region setter 11 calculates, for example, a horizontal position Pr of the right end of the front vehicle region F, a horizontal position PL of the left end of the front vehicle region F, a horizontal position Pm of a center M of the front vehicle region F, a vertical position Pu of the upper end of the front vehicle region F, and a vertical position Pd of the lower end of the front vehicle region F. The horizontal positions Pr, PL, and Pm are each calculated as a length (number of pixels) in the horizontal direction from a horizontal position PfoeL of a focus of expansion [FOE] of the front captured image IM, for example. The vertical positions Pu and Pd are each calculated as a length (number of pixels) in the vertical direction from a vertical position PfoeV of the focus of expansion FOE, for example.

The region setter 11 converts the horizontal position Pr, the horizontal position PL, the horizontal position Pm, the vertical position Pu, and the vertical position Pd into angles, respectively, to calculate the right vehicle angle θr, the left vehicle angle θL, the center vehicle angle θm, the upper vehicle angle θu, and the lower vehicle angle θd.

A length LL of the front captured image IM in the horizontal direction corresponds to a horizontal angle of view of the camera. The optical axis of the camera passes through the center of the vehicle in the vehicle width direction (horizontal direction) in the front captured image IM, for example. An angle (horizontal angle with respect to the front-rear axis) corresponding to the horizontal position PfoeL of the focus of expansion FOE is determined to be, for example, 0°. In this case, the right vehicle angle θr of the preceding vehicle V can be calculated by proportional distribution of the horizontal angle of view of the camera at a ratio of the horizontal position Pr to the horizontal length LL of the front captured image IM. The left vehicle angle θL of the preceding vehicle V can be calculated by proportional distribution of the horizontal angle of view of the camera at a ratio of the horizontal position PL to the horizontal length LL. The center vehicle angle θm of the preceding vehicle V can be calculated by proportional distribution of the horizontal angle of view of the camera at a ratio of the horizontal position Pm to the horizontal length LL.

A length LV of the front captured image IM in the vertical direction corresponds to a vertical angle of view of the camera. The optical axis of the camera is directed in a direction in which the focus of expansion FOE is located at the center of the front captured image IM in the vertical direction, for example. An angle (vertical angle with respect to the front-rear axis) corresponding to the vertical position PfoeV of the focus of expansion FOE is determined to be, for example, 0°. In this case, the upper vehicle angle θu of the preceding vehicle V can be calculated by proportional distribution of the vertical angle of view of the camera at a ratio of the vertical position Pu to the vertical length LV of the front captured image IM. The lower vehicle angle θd of the preceding vehicle V can be calculated by proportional distribution of the vertical angle of view at a ratio of the vertical position Pd to the vertical length LV.

The region setter 11 calculates an upper vehicle height angle and a lower vehicle height angle from, for example, a vehicle height angle of the preceding vehicle V. The vehicle height angle of the preceding vehicle V is an angle representing a range of a vehicle height of the preceding vehicle V as viewed from the vehicle as an angle range. The vehicle height angle can be calculated as a difference between the upper vehicle angle θu and the lower vehicle angle θd. The vehicle height angle corresponds to a vertical length of the preceding vehicle V (front vehicle region F) in the front captured image IM. The region setter 11 calculates, for example, a value that is half of the vehicle height angle as the upper vehicle height angle and the lower vehicle height angle, respectively. The upper vehicle height angle corresponds to a vertical length from the center M of the preceding vehicle V to the upper end of the front vehicle region F. The lower vehicle height angle corresponds to a vertical length from the center M of the preceding vehicle V to the lower end of the front vehicle region F.

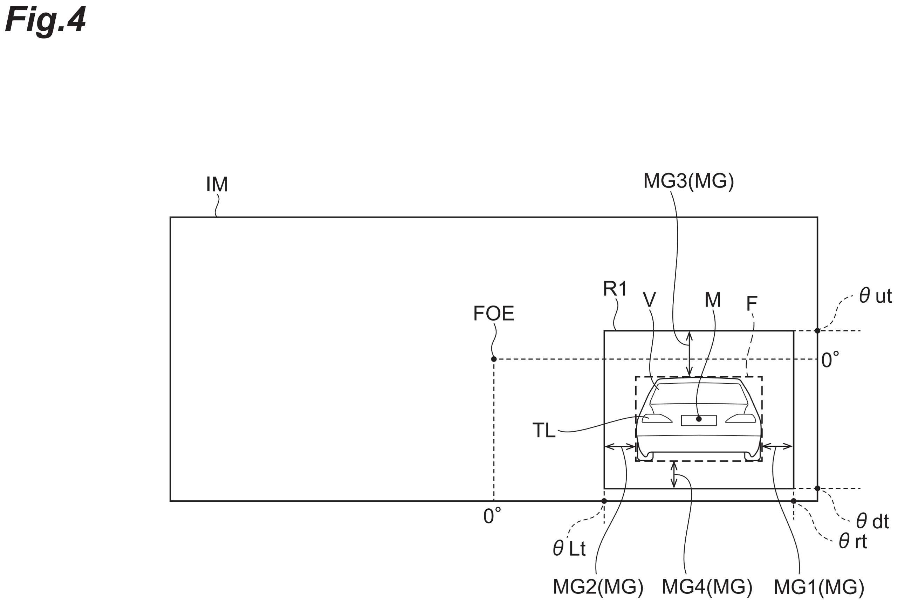

Fig. 4 is a schematic diagram illustrating an example of a first region including a front vehicle in a front captured image. As shown in Figs. 2A, 2B, 2C, and 4, the region setter 11 sets the irradiation control region of the headlight 3 including the first region R1 and the second region R2 based on the front vehicle region F. First, as shown in Fig. 4, the region setter 11 defines (sets) the first region R1 including the preceding vehicle V of the vehicle.

The region setter 11 defines a size of the first region R1 in the front captured image IM by providing, for example, a shielding size margin MG to surround the front vehicle region F in the front captured image IM. The shielding size margin MG corresponds to, for example, a width dimension of a frame-shaped region provided around the front vehicle region F in the front captured image IM. The shielding size margin MG may be a value of a positive angle to be added to the vehicle angle corresponding to the position of the ends of the front vehicle region F in the upper, lower, left, and right directions.

The shielding size margin MG includes, for example, a right shielding size margin MG1, a left shielding size margin MG2, an upper shielding size margin MG3, and a lower shielding size margin MG4. The right shielding size margin MG1 is a margin for expanding the first region R1 to the right side with respect to the horizontal position Pr of the right end of the front vehicle region F in the front captured image IM. The left shielding size margin MG2 is a margin for expanding the first region R1 to the left side with respect to the horizontal position PL of the left end of the front vehicle region F in the front captured image IM. The upper shielding size margin MG3 is a margin for expanding the first region R1 upward with respect to the vertical position Pu of the upper end of the front vehicle region F in the front captured image IM. The lower shielding size margin MG4 is a margin for expanding the first region R1 downward with respect to the vertical position Pd of the lower end of the front vehicle region F in the front captured image IM.

The region setter 11 calculates an angle value obtained by adding the angle of the shielding size margin MG to the vehicle angle for each of the upper, lower, left, and right directions, as the size of the first region R1. The region setter 11 calculates, for example, a shielding horizontal angle and a shielding vertical angle as the angle value representing the range of the first region R1. The shielding horizontal angle is a horizontal angle representing a range in which the irradiation light of the headlight 3 has an illuminance (shielding) corresponding to the first light intensity in the horizontal direction as viewed from the vehicle. The shielding vertical angle is a vertical angle representing a range in which the irradiation light of the headlight 3 has an illuminance (shielding) corresponding to the first light intensity in the vertical direction as viewed from the vehicle. In the example of Fig. 4, the shielding horizontal angle and the shielding vertical angle are shielding horizontal angles θrt and θLt and shielding vertical angles θut and θdt.

Subsequently, the region setter 11 sets the second region R2 around the first region R1. As shown in Figs. 2A, 2B, and 2C, an inner edge of the second region R2 may coincide with the outer edge of the first region R1. An outer edge of the second region R2 may correspond to a maximum irradiation range of the high beam of the headlight 3 on the outside of the first region R1. The second region R2 may correspond to the entire region on the outside of the first region R1.

The region setter 11 sets the size of the blur region R3 surrounding the first region R1 on the first region R1 side in the second region R2. As shown in Figs. 2A, 2B, and 2C, a shape of the blur region R3 may be a frame shape continuously surrounding the entire outer edge of the first region R1 by expanding from the outer edge of the first region R1 toward the outside. The region setter 11 defines the size of the blur region R3 by adding, for example, a blurriness size angle value BL to each target shielding angle corresponding to the outer edge of the first region R1. The blurriness size angle value BL is an angle representing a size of the blur region R3 provided around the first region R1 as a relative angle range as viewed from the vehicle.

The blurriness size angle value BL includes, for example, a right blurriness size angle value BL1, a left blurriness size angle value BL2, an upper blurriness size angle value BL3, and a lower blurriness size angle value BL4. The right blurriness size angle value BL1 is an angle value for expanding the blur region R3 to the right side with respect to the shielding horizontal angle θrt corresponding to the position of the right end of the first region R1. The left blurriness size angle value BL2 is an angle value for expanding the blur region R3 to the left side with respect to the shielding horizontal angle θLt corresponding to the position of the left end of the first region R1. The upper blurriness size angle value BL3 is an angle value for expanding the blur region R3 upward with respect to the shielding vertical angle θut corresponding to the position of the upper end of the first region R1. The lower blurriness size angle value BL4 is an angle value for expanding the blur region R3 downward with respect to the shielding vertical angle θdt corresponding to the position of the lower end of the first region R1.

The region setter 11 calculates an angle value obtained by adding the blurriness size angle value BL to the angle value representing the outer edge of the first region R1 as the size of the blur region R3 for each of the upper, lower, left, and right directions. The region setter 11 calculates, for example, a blurriness end horizontal angle and a blurriness end vertical angle as the angle value representing the size of the blur region R3. The blurriness end horizontal angle is a horizontal angle representing a range in which the set light intensity of the headlight 3 is set to the third light intensity in the horizontal direction as viewed from the vehicle. The blurriness end vertical angle is a vertical angle representing a range in which the set light intensity of the headlight 3 is set to the third light intensity in the vertical direction as viewed from the vehicle. In the examples of Figs. 2A, 2B, and 2C, the range in which the set light intensity of the headlight 3 is set to the third light intensity by the blurriness end horizontal angle and the blurriness end vertical angle corresponds to a range outside a white one-dot chain line and inside a black one-dot chain line.

### [Selection Operation by User]

The shielding size margin MG may be a sum of a basic margin and an occupant setting margin in each of the upper, lower, left, and right directions. The basic margin is a basic value of the shielding size margin MG determined without depending on occupant settings. The region setter 11 may calculate the basic margin as a parameter set in advance corresponding to each of the right side, the left side, the upper side, and the lower side of the front vehicle region F. The region setter 11 may read out a predetermined map value set in advance according to the width of the preceding vehicle V on each of the right side and the left side of the front vehicle region F to calculate the basic margin. The region setter 11 may dynamically correct the basic margin based on at least one of a traveling state of the preceding vehicle V and a traveling state of the vehicle. The traveling state of the preceding vehicle V may be, for example, a relative distance of the preceding vehicle V to the vehicle. The traveling state of the preceding vehicle V may be a relative speed of the preceding vehicle V to the vehicle. The relative speed of the preceding vehicle V may be calculated from the detection result of the radar sensor and a detection result of a vehicle speed sensor of the vehicle.

The occupant setting margin is a customization value of the shielding size margin MG determined by the user operation. The user operation is, for example, a selection operation of the occupant setting margin by the occupant. The selection information includes information on the occupant setting margin selected in accordance with the selection operation. The region setter 11 acquires the occupant setting margin (selection information) corresponding to the selection operation by the occupant as the user operation. The user operation here is a selection operation in which the occupant operates the operation button or the touch panel of the HMI 2.

Similarly, the blurriness size angle value BL may be a product of a basic blurriness size angle value and an occupant setting blurriness size coefficient in each of the upper, lower, left, and right directions. The basic blurriness size angle value is a basic value of the blurriness size angle value BL determined without depending on occupant settings. The region setter 11 may calculate the basic blurriness size angle value as a parameter set in advance corresponding to each of the right side, the left side, the upper side, and the lower side of the first region R1. The region setter 11 may read out a predetermined map value set in advance according to the width of the preceding vehicle V on each of the right side and the left side of the first region R1 to calculate the basic blurriness size angle value. The region setter 11 may dynamically correct the basic blurriness size angle value based on at least one of the traveling state of the preceding vehicle V and the traveling state of the vehicle. The traveling state of the preceding vehicle V may be, for example, a relative distance of the preceding vehicle V to the vehicle. The traveling state of the preceding vehicle V may be a relative speed of the preceding vehicle V to the vehicle. The relative speed of the preceding vehicle V may be calculated from the detection result of the radar sensor and a detection result of a vehicle speed sensor of the vehicle.

The occupant setting blurriness size coefficient is a customization value of the blurriness size angle value BL determined by the user operation. The user operation is, for example, a selection operation of the occupant setting blurriness size coefficient by the occupant. The selection information includes information on the occupant setting blurriness size coefficient selected in accordance with the selection operation.

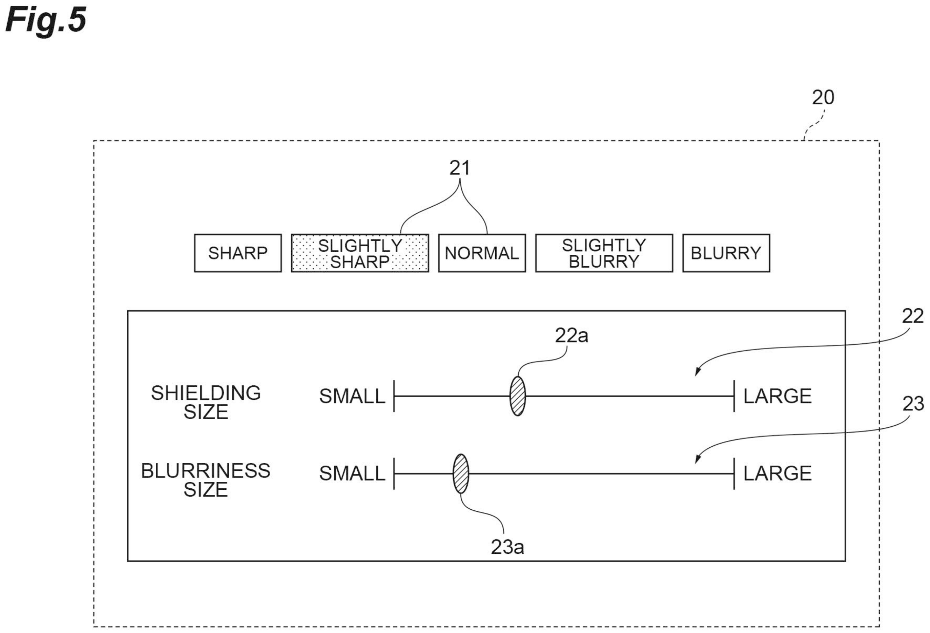

Fig. 5 is a schematic diagram illustrating a display example of a selection information acquirer. Fig. 5 shows an operation panel image 20 (selection information acquirer) displayed on the touch panel of the HMI 2. Five operation button images 21 are displayed side by side on the top of the operation panel image 20. The five operation button images 21 correspond to the "sharp" stage, the "slightly sharp" stage, the "normal" stage, the "slightly blurry" stage, and the "blurry" stage in order from the left.

A preset value of the occupant setting margin and the occupant setting blurriness size coefficient is assigned to each of the five operation button images 21. These preset values are stored in the light distribution control ECU 10 to sequentially increase in order of the "slightly sharp" stage, the "normal" stage (the intermediate stage), the "slightly blurry" stage, and the "blurry" stage with the "sharp" stage as a minimum value.

The occupant setting margin may be, for example, a constant map of angles corresponding to the five operation button images 21 as shown in Table 1 below. In the example of Table 1, a right occupant setting margin, a left occupant setting margin, an upper occupant setting margin, and a lower occupant setting margin are stored in the light distribution control ECU 10 in advance corresponding to the "sharp" stage, the "slightly sharp" stage, the "normal" stage, the "slightly blurry" stage, and the "blurry" stage, respectively. In Table 1, θr1, θL1, θu1, and θd1 corresponding to the "blurry" stage are values of the largest angles, and θr5, θL5, θu5, and θd5 corresponding to the "sharp" stage are values of the smallest angles, respectively. θr5, θL5, θu5, and θd5 may monotonically increase to θr1, θL1, θu1, and θd1.

**[Table 1]**

| | Right occupant setting margin | Left occupant setting margin | Upper occupant setting margin | Lower occupant setting margin |
|---|---|---|---|---|
| Blurry | θr1 | θL1 | θu1 | θd1 |
| Slightly blurry | θr2 | θL2 | θu2 | θd2 |
| Normal | θr3 | θL3 | θu3 | θd3 |
| Slightly sharp | θr4 | θL4 | θu4 | θd4 |
| Sharp | θr5 | θL5 | θu5 | θd5 |

The occupant setting blurriness size coefficient may be, for example, a constant map of coefficients corresponding to the five operation button images 21 as shown in Table 2 below. In the example of Table 2, a right occupant setting blurriness size coefficient, a left occupant setting blurriness size coefficient, an upper occupant setting blurriness size coefficient, and a lower occupant setting blurriness size coefficient are stored in the light distribution control ECU 10 in advance corresponding to the "sharp" stage, the "slightly sharp" stage, the "normal" stage, the "slightly blurry" stage, and the "blurry" stage, respectively. In Table 2, Cr1, CL1, Cu1, and Cd1 corresponding to the "blurry" stage are values of the largest coefficients, and Cr5, CL5, Cu5, and Cd5 corresponding to the "sharp" stage are values of the smallest coefficients, respectively. Cr5, CL5, Cu5, and Cd5 may monotonically increase to Cr1, CL1, Cu1, and Cd1.

**[Table 2]**

| | Right occupant setting blurriness size coefficient | Light occupant setting blurriness size coefficient | Upper occupant setting blurriness size coefficient | Lower occupant setting blurriness size coefficient |
|---|---|---|---|---|
| Blurry | Cr1 | CL1 | Cu1 | Cd1 |
| Slightly blurry | Cr2 | CL2 | Cu2 | Cd2 |
| Normal | Cr3 | CL3 | Cu3 | Cd3 |
| Slightly sharp | Cr4 | CL4 | Cu4 | Cd4 |
| Sharp | Cr5 | CL5 | Cu5 | Cd5 |

Below the operation button image 21, a slide lever image 22 is displayed together with a character string "shielding size" meaning a size of the occupant setting margin. When an occupant moves a lever 22a of the slide lever image 22 left and right, the size of the occupant setting margin can be adjusted in a predetermined range from "small" to "large". A position of the lever 22a may be movable between positions corresponding to the "sharp" stage, the "slightly sharp" stage, the "normal" stage, the "slightly blurry" stage, and the "blurry" stage (positions corresponding to the five preset values). The position of the lever 22a may be adjustable independently of the operation of the operation button image 21 and without corresponding to the five preset values.

Below the slide lever image 22, a slide lever image 23 is displayed together with a character string "blurriness size" meaning a size of the occupant setting blurriness size coefficient. When the occupant moves a lever 23a of the slide lever image 23 left and right, the size of the occupant setting blurriness size coefficient can be adjusted in a predetermined range from "small" to "large". A position of the lever 23a may be movable between positions corresponding to the "sharp" stage, the "slightly sharp" stage, the "normal" stage, the "slightly blurry" stage, and the "blurry" stage (positions corresponding to the five preset values). The position of the lever 23a may be adjustable independently of the operation of the operation button image 21.

When the occupant touches any of the operation button images 21, both the occupant setting margin and the occupant setting blurriness size coefficient are changed in a linked manner to be the preset value corresponding to the touched operation button image 21. When the occupant setting margin and the occupant setting blurriness size coefficient are changed in a linked manner, both the position of the lever 22a of the slide lever image 22 and the position of the lever 23a of the slide lever image 23 are moved in a linked manner to correspond to the respective preset values. That is, the operation of touching the operation button image 21 by the occupant is a linked selection operation.

As described above, the region setter 11 acquires the occupant setting margin and the occupant setting blurriness size coefficient as the selection information corresponding to the selection operation by the occupant. The occupant setting margin and the occupant setting blurriness size coefficient here are linked selection information corresponding to the linked selection operation by the occupant when the occupant touches the operation button image 21. In other words, the linked selection information is selection information for setting the size of the blur region R3 and the size of the first region R1 in a linked manner. The region setter 11 sets the size of the blur region R3 and the size of the first region R1 in a linked manner based on the linked selection information corresponding to the linked selection operation by the occupant.

As described above, the size of the shielding size margin MG is determined according to the occupant setting margin selected by the occupant. The size of the first region R1 is determined according to the size of the shielding size margin MG. A position of the inner edge of the second region R2 moves in accordance with the movement of a position of the outer edge of the first region R1. The inner edge of the blur region R3 moves in accordance with the movement of the position of the inner edge of the second region R2. That is, the region setter 11 sets the size of the blur region R3 according to the shielding size margin MG determined by the user operation.

Further, the size of the blurriness size angle value BL is determined according to the occupant setting blurriness size coefficient selected by the occupant. The size of the blur region R3 is determined according to the size of the blurriness size angle value BL. As a position of the outer edge of the blur region R3 moves, the irradiation range of the irradiation light emitted from the headlight 3 to the front of the vehicle with the third light intensity as the set light intensity changes. That is, the region setter 11 sets the size of the blur region R3 according to the blurriness size angle value BL determined by the user operation.

Meanwhile, the light intensity setter 12 may set the third light intensity of the blur region R3 to linearly increase from 0% to 100% as the distance from the first region R1 increases. In this case, the set light intensity of the LED group responsible for irradiating the inner edge (outer edge of the first region R1) of the blur region R3 is 0%. The set light intensity of the LED group responsible for irradiating the outer edge (position corresponding to the blurriness size angle value BL in the second region R2) of the blur region R3 is 100%. The set light intensity of the LED group responsible for irradiating the range from the inner edge of the blur region R3 to the outer edge of the blur region R3 may linearly increase in proportion to the distance from the LED group responsible for irradiating the inner edge (outer edge of the first region R1) of the blur region R3.

Alternatively, the light intensity setter 12 may set the third light intensity of the blur region R3 to increase non-linearly from 0% to 100% as the distance from the first region R1 increases. In this case, the set light intensity of the LED group responsible for irradiating the range from the inner edge of the blur region R3 to the outer edge of the blur region R3 may increase (for example, quadratically) such that an increase rate is larger as the distance from the LED group responsible for irradiating the inner edge of the blur region R3 is larger. On the contrary, the set light intensity of the LED group responsible for irradiating the range from the inner edge of the blur region R3 to the outer edge of the blur region R3 may increase (for example, logarithmically) such that the increase rate is larger as the distance from the LED group responsible for irradiating the inner edge of the blur region R3 is smaller.

The light intensity setter 12 may change the third light intensity of the blur region R3 in association with a change in the size of the blur region R3 by the user operation. The light intensity setter 12 may change a change rate (slope when linearly increasing) of the third light intensity of the blur region R3 according to a distance between the inner edge and the outer edge of the blur region R3 changed by the user operation. For example, when the size of the blur region R3 is increased, the change rate of the third light intensity of the blur region R3 may be decreased as the distance between the inner edge and the outer edge of the blur region R3 is increased. In this case, the illuminance tends to decrease in the blur region R3, whereby the blur region R3 is more clearly visually recognized in a blurry manner. When the size of the blur region R3 is decreased, the change rate of the third light intensity of the blur region R3 may be increased as the distance between the inner edge and the outer edge of the blur region R3 is shortened. In this case, the illuminance tends to appear to increase in the blur region R3, whereby the blur region R3 is more clearly visually recognized in a sharp manner.

The occupant setting margin and the occupant setting blurriness size coefficient are not limited to the angle values and coefficients as shown in Tables 1 and 2. The occupant setting margin and the occupant setting blurriness size coefficient may be directly set by each numerical value via the HMI 2.

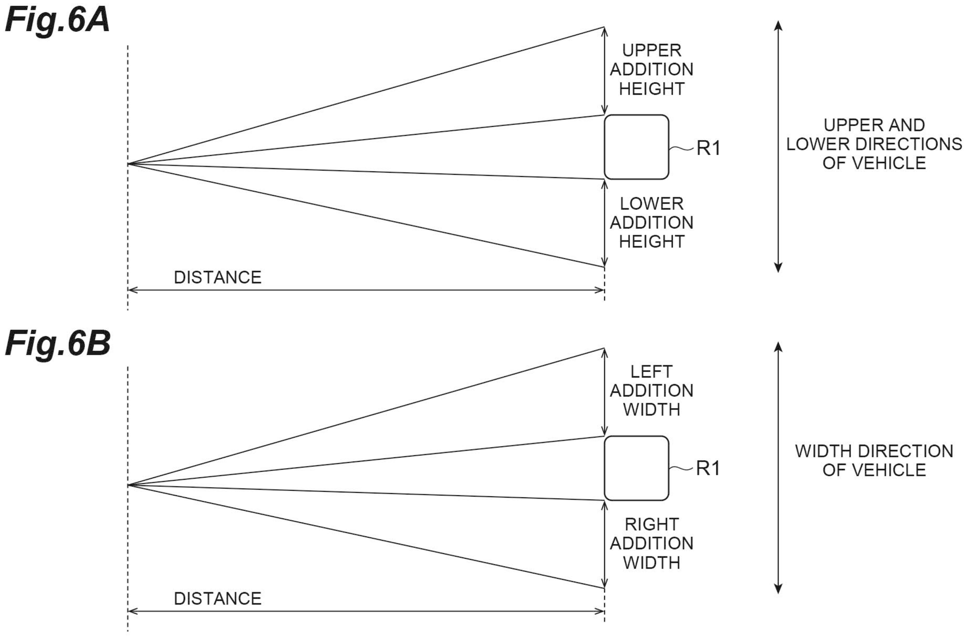

Alternatively, for example, as shown in Figs. 6A and 6B, the occupant setting margin and the occupant setting blurriness size coefficient may be an aspect in which an upper addition height and a lower addition height, and a left addition width and a right addition width are selected according to the selection operation by the occupant. Figs. 6A and 6B show an example in which distances corresponding to the occupant setting blurriness size are set in the upper, lower, left, and right directions of the outer edge of the first region R1. In Figs. 6A and 6B, a position of a point at which a plurality of straight lines intersect on the left side of the first region R1 corresponds to a position of the headlight 3 of the vehicle. This means that light from the headlight 3 is emitted as the blur region R3 in a range of the upper addition height and the lower addition height, and the left addition width and the right addition width.

The upper addition height, the lower addition height, the left addition width, and the right addition width can be coefficients per unit distance. In this case, a value obtained by multiplying a distance from the vehicle to the preceding vehicle V by the coefficient per unit distance may be added to each of the upper, lower, left, and right positions corresponding to the outer edge of the first region R1, and the resulting positions may be used as positions corresponding to the outer edge of the blur region R3.

### [Operation of Light Distribution Control Apparatus]

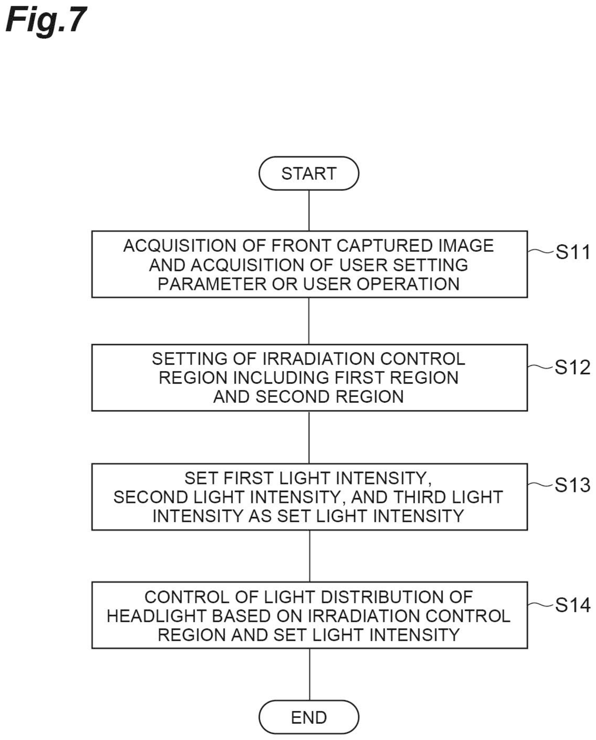

Subsequently, an operation of the light distribution control apparatus 100 will be described with reference to the drawings. Fig. 7 is a flowchart illustrating an example of processing of a light distribution control ECU of Fig. 1. The processing of the ECU of Fig. 7 may be executed, for example, when power is applied to the light distribution control ECU 10 and a switch for the adaptive high-beam control is turned on.

As shown in Fig. 7, the light distribution control ECU 10 of the light distribution control apparatus 100 performs, as step S11, the acquisition of the front captured image and the acquisition of the user setting parameter or the user operation by the region setter 11. The region setter 11 acquires, for example, the front captured image IM obtained by imaging the preceding vehicle V with the camera of the vehicle, and calculates the front vehicle region F. The region setter 11 acquires, for example, the selection information corresponding to the selection operation of the occupant to set the size of the blur region R3 as the user setting parameter or the user operation.

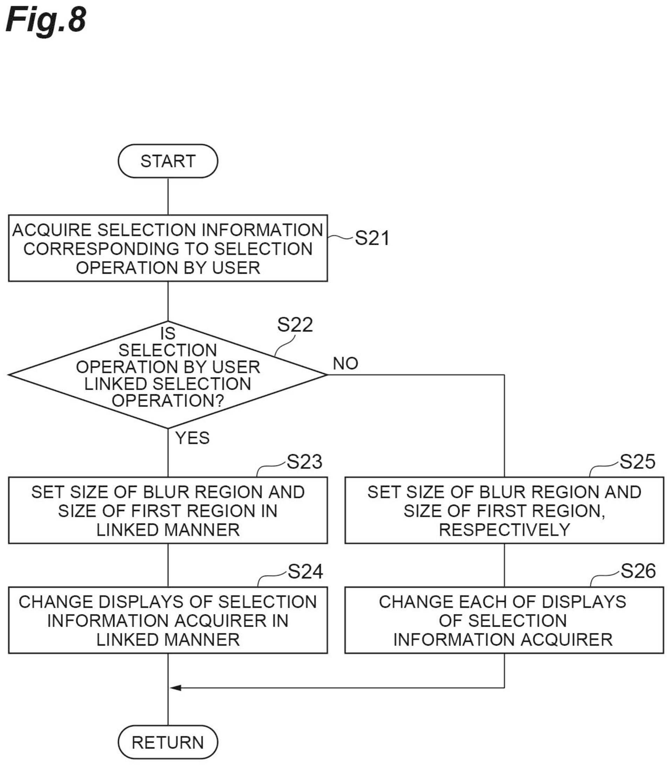

In step S12, the light distribution control ECU 10 sets the irradiation control region including the first region and the second region by the region setter 11 (region setting step). The region setter 11 acquires the added value of the occupant setting margins (the sum of the basic margin and the occupant setting margin) and the occupant setting blurriness size coefficient by performing, for example, processing of Fig. 8. The region setter 11 sets the first region R1 and the second region R2 based on, for example, the front vehicle region F and the sum of the basic margin and the occupant setting margin. The region setter 11 sets the size of the blur region R3 surrounding the first region R1 on the first region R1 side in the second region R2 based on the product of the basic blurriness size angle value and the occupant setting blurriness size coefficient.

Fig. 8 is a flowchart illustrating an example of a setting process of an irradiation control region in Fig. 7. As shown in Fig. 8, the light distribution control ECU 10 acquires the selection information corresponding to the selection operation by the user by the region setter 11 as step S21. The region setter 11 acquires, for example, the selection information corresponding to the selection operation by the occupant by operating the operation panel image 20 displayed on the touch panel of the HMI 2 by the occupant.

In step S22, the light distribution control ECU 10 determines whether or not the selection operation by the user is the linked selection operation by the region setter 11. The region setter 11 determines that the selection operation by the occupant is the linked selection operation, for example, when the operation button image 21 of the operation panel image 20 is operated by the occupant. The region setter 11 determines that the selection operation by the occupant is not the linked selection operation (is the selection operation), for example, when the lever 22a of the slide lever image 22 is operated by the occupant or when the lever 23a of the slide lever image 23 is operated by the occupant.

When it is determined that the selection operation by the occupant is the linked selection operation (S22: YES), in step S23, the light distribution control ECU 10 sets the size of the blur region R3 and the size of the first region R1 in a linked manner by the region setter 11. The region setter 11 changes the occupant setting margin and the occupant setting blurriness size coefficient in a linked manner to set both the occupant setting margin and the occupant setting blurriness size coefficient, for example.

In step S24, the light distribution control ECU 10 changes the displays of the selection information acquirer in a linked manner by the region setter 11. The region setter 11 changes the position of the lever 22a of the slide lever image 22 and the position of the lever 23a of the slide lever image 23 in a linked manner as the displays of the selection information acquirer based on the occupant setting margin and the occupant setting blurriness size coefficient changed in a linked manner in response to the operation of the operation button image 21 by the occupant, for example. Thereafter, the light distribution control ECU 10 ends the current processing of Fig. 8 and returns to the processing of Fig. 7.

On the other hand, when it is determined that the selection operation by the occupant is not the linked selection operation (is the selection operation) (S22: NO), in step S25, the light distribution control ECU 10 sets the size of the blur region R3 and the size of the first region R1 by the region setter 11, respectively. The region setter 11 changes the occupant setting margin without being linked to the occupant setting blurriness size coefficient, to set each of the occupant setting margin and the occupant setting blurriness size coefficient, for example, when the lever 22a of the slide lever image 22 is operated by the occupant. Alternatively, the region setter 11, for example, when the lever 23a of the slide lever image 23 is operated by the occupant, changes the occupant setting blurriness size coefficient without being linked to the occupant setting margin, and respectively sets both the occupant setting margin and the occupant setting blurriness size coefficient.

In step S26, the light distribution control ECU 10 changes each of the displays of the selection information acquirer by the region setter 11. The region setter 11 individually changes the position of the lever 22a of the slide lever image 22 as the display of the selection information acquirer based on, for example, the occupant setting margin changed without being linked to the occupant setting blurriness size coefficient in response to the operation of the lever 22a of the slide lever image 22 by the occupant. Alternatively, the region setter 11 individually changes the position of the lever 23a of the slide lever image 23 as the display of the selection information acquirer based on, for example, the occupant setting blurriness size coefficient changed without being linked to the occupant setting margin in response to the operation of the lever 23a of the slide lever image 23 by the occupant. Thereafter, the light distribution control ECU 10 ends the current processing of Fig. 8 and returns to the processing of Fig. 7.

Returning to the processing of Fig. 7, in step S13, the light distribution control ECU 10 sets the first light intensity, the second light intensity, and the third light intensity as the set light intensity by the light intensity setter 12 (light intensity setting step). The light intensity setter 12 sets, for example, the first light intensity of the first region R1, the second light intensity of the second region R2 that is higher than the first light intensity, and the third light intensity of the blur region R3 that increases from the first light intensity to the second light intensity based on the set irradiation control region.

In step S14, the light distribution control ECU 10 controls the light distribution of the headlight based on the irradiation control region and the set light intensity by the lighting controller 13 (lighting control step). The lighting controller 13 selects the LED group for turning on or off in the LED matrix of the headlight 3 with the set light intensity (the first light intensity, the second light intensity, and the third light intensity) set according to each portion (the first region R1, the second region R2, and the blur region R3) of the set irradiation control region, for example. The lighting controller 13 executes the adaptive high-beam control by turning on or off the selected LED group. Thereafter, the light distribution control ECU 10 ends the current processing of Fig. 7. The light distribution control ECU 10 may repeat the processing of Fig. 7 at predetermined intervals.

### [Light Distribution Control Program]

A light distribution control program causes the light distribution control ECU 10 (computer) to function (operate) as the region setter 11, the light intensity setter 12, and the lighting controller 13 described above. The light distribution control program is provided by a non-transitory recording medium such as a ROM or semiconductor memory. The light distribution control program may be provided via communication such as a network.

### [Operations and Effects]

Here, the size of the blur region R3 varies according to the preference of each occupant. In addition, when the size of the blur region R3 is constant, there is a possibility that the occupant whose preference does not match the size of the blur region R3 feels uncomfortable.

Regarding this point, according to the light distribution control apparatus 100, the control method of a light distribution control apparatus, and the light distribution control program, the size of the blur region R3 surrounding the first region R1 on the first region R1 side in the second region R2 is set based on the user operation of the user of the vehicle. At least the size of the blur region R3 can be adjusted according to the user operation. Therefore, it is easier for the occupant to feel the light distribution to be less unnatural as compared to when the size of the blur region R3 is constant. Therefore, according to the light distribution control apparatus 100, the control method of a light distribution control apparatus, and the light distribution control program, it is possible to control the light distribution of the headlight for the occupant to feel the light distribution is less unnatural.

In the light distribution control apparatus 100, the control method of a light distribution control apparatus, and the light distribution control program, the selection information corresponding to the selection operation by the occupant to set the size of the blur region R3 is acquired as the user operation. Accordingly, the occupant can adjust the size of the blur region R3 by performing the selection operation according to the preferences of each occupant.

In the light distribution control apparatus 100, the control method of a light distribution control apparatus, and the light distribution control program, the size of the first region R1 is set based on the user operation. Accordingly, the size of the first region R1 is adjusted according to the user operation, so that the size of the blur region R3 is changed on the first region R1 side. Therefore, it is easier for the occupant to recognize the change in the size of the blur region R3.

In the light distribution control apparatus 100, the control method of a light distribution control apparatus, and the light distribution control program, the linked selection information corresponding to the linked selection operation by the occupant to set the size of the blur region R3 and the size of the first region R1 in a linked manner is acquired as the user operation. Accordingly, the sizes of the blur region R3 and the first region R1 are adjusted in a linked manner, making it easier for the occupant to perform the selection operation while making it easier for the occupant to recognize the change in the size of the blur region R3.

Meanwhile, when the set light intensity corresponding to the blur region is changed without changing the size of the blur region, in a real environment, the occupant tends not to have high sensitivity for visually recognizing the change in the light intensity in the blur region. Due to such a tendency, for example, even when the occupant changes only the set light intensity without changing the size of the blur region, the occupant may not be able to clearly feel the change in the light intensity in the blur region and may feel uncomfortable. According to the light distribution control apparatus 100, the control method of a light distribution control apparatus, and the light distribution control program, the size of the blur region is changed instead of the change in the light intensity in the blur region or together with the change in the light intensity in the blur region. Accordingly, the occupant visually recognizes the change in the size of the blur region, making it easier for the occupant to feel that the user operation is reflected in the adaptive high-beam control, and it is possible for the occupant to feel the light distribution is less unnatural.

Hitherto, the example of the present invention has been described above, but the present invention is not limited to the above-described example. The present invention can be carried out in various forms having various changes and improvements based on the knowledge of those skilled in the art, including the above-described example.

In the above-described example, the region setter 11 sets the size of the blur region R3 surrounding the first region R1 on the first region R1 side in the second region R2 based on the user operation of the user of the vehicle, but the present invention is not limited to this example. For example, the region setter may set the size of the blur region R3 based on a user setting parameter of the user of the vehicle. The user setting parameter may be setting information stored for each occupant. The setting information is, for example, information for defining the first region, the second region, and the blur region, such as the shielding size margin and the blurriness size angle value. The user setting parameter can be setting information in which parameters adjusted by acquiring the selection information corresponding to the selection operation by the occupant in the past are stored for each occupant. In this case, the region setter may specify the occupant based on, for example, a captured image of a driver monitor camera. The region setter may store the user setting parameter adjusted in response to the selection operation by the occupant in the past and use the user setting parameter corresponding to the specified occupant. Accordingly, it is possible to omit the selection operation by the occupant for re-performing the same adjustment. The user setting parameter stored for each occupant may be provided in a state of being stored in a storage medium.

In the above-described example, the shielding size margin MG is a value of a positive angle to be added to the vehicle angle corresponding to the position of the ends of the front vehicle region F in the upper, lower, left, and right directions, but the present invention is not limited to this example. The shielding size margin may be an additional height and an additional width as described with reference to Figs. 6A and 6B instead of the value of the angle, or an aspect may be adopted in which the shielding size margin is obtained by multiplying a predetermined basic margin by a coefficient.

In the above-described example, the size of the blur region is defined by multiplying the basic blurriness size angle value by the occupant setting blurriness size coefficient, but the present invention is not limited to this example. The size of the blur region may otherwise be an aspect in which the size of the blur region is defined by adding an angle value providing the size of the blur region to the vehicle angle corresponding to the position of the upper, lower, left, and right of the outer edge of the first region.

In the above-described example, the selection operation by the user is illustrated by the selection operation by the occupant, but the present invention is not limited to this example. For example, the user may be an operator who remotely operates the vehicle. The vehicle may be an autonomous driving vehicle that can be remotely operated. In this case, the operator who operates the vehicle remotely may perform the selection operation by a remote operation device or the like.

In the above-described example, the selection operation by the user is illustrated by the selection operation by the occupant, but the present invention is not limited to this example. The shape of the blur region R3 is a frame shape continuously surrounding the entire outer edge of the first region R1 by expanding from the outer edge of the first region R1 toward the outside, but the present invention is not limited to this example. For example, the shape of the blur region may be a shape (for example, U-shaped) surrounding the entire outer edge of the first region R1 by being discontinuous in a part along the outer edge of the first region R1. The blur region R3 only needs to have a shape that surrounds the first region R1 on the first region R1 side in the second region R2.

In the above-described example, the first light intensity of the first region R1 is a set light intensity of 0% (shielding light), but the present invention is not limited to this example. The first light intensity of the first region may be a set light intensity of reduced light less than the second light intensity of the second region R2 instead of the shielding light. The second light intensity of the second region R2 is a set light intensity of 100%, but the present invention is not limited to this example. The second light intensity of the second region may be a set light intensity higher than the first light intensity and smaller than 100%.

The region setter 11 may correct the size of the blur region set based on the user setting parameter or the user operation according to a weather condition. For example, the size of the blur region that feels less unnatural to the user may vary depending on different weather conditions such as rain, fog, and snow. The region setter 11 may detect the weather condition by a known method using the detection result of the external sensor 1 or the like. The region setter 11 may store the user setting parameter for each different weather condition and use the user setting parameter corresponding to the detected weather condition.

The region setter 11 may correct the size of the blur region set based on the user setting parameter or the user operation according to a traveling direction or a type of the front vehicle. For example, in addition to the preceding vehicle in the above-described example, the size of the blur region for the user to feel the light distribution to be less unnatural may vary depending on the traveling direction of different front vehicles such as an oncoming vehicle and a front-crossing vehicle. The size of the blur region for the user to feel the light distribution to be less unnatural may vary depending on the types of different front vehicles such as a four-wheeled vehicle, a two-wheeled vehicle, and a large vehicle. The region setter 11 may detect the traveling direction or the type of the front vehicle by a known method using the detection result of the external sensor 1 or the like. The region setter 11 may store the user setting parameter for each different traveling direction or type of the front vehicle and use the user setting parameter corresponding to the detected traveling direction or type of the front vehicle.

## Claims

1. A light distribution control apparatus (100) controlling light distribution of a headlight (3) irradiating a region in front of a vehicle, the light distribution control apparatus (100) comprising:
a region setter (11) configured to set an irradiation control region of the headlight (3) including a first region (R1) including a front vehicle (V) in a front direction of the vehicle and a second region (R2) not including the front vehicle (V) in a periphery of the first region (R1), based on a front captured image (IM) of an on-board camera (1) of the vehicle;
a light intensity setter (12) configured to set a set light intensity of the headlight (3) based on the irradiation control region; and
a lighting controller (13) configured to control the light distribution of the headlight (3) based on the irradiation control region and the set light intensity,
wherein the region setter (11) is configured to set a size of a blur region (R3) surrounding the first region (R1) on a first region (R1) side in the second region (R2), based on a user setting parameter or a user operation of a user of the vehicle, and
the light intensity setter (12) is configured to set a first light intensity of the first region (R1), a second light intensity of the second region (R2) that is higher than the first light intensity, and a third light intensity of the blur region (R3) that increases from the first light intensity to the second light intensity as a distance from the first region (R1) increases.

2. The light distribution control apparatus (100) according to claim 1,
wherein the region setter (11) is configured to acquire selection information corresponding to a selection operation of the user to set the size of the blur region (R3), as the user setting parameter or the user operation.

3. The light distribution control apparatus (100) according to claim 1 or 2,
wherein the region setter (11) is configured to set a size of the first region (R1) based on the user setting parameter or the user operation.

4. The light distribution control apparatus (100) according to claim 3,
wherein the region setter (11) is configured to acquire linked selection information corresponding to a linked selection operation of the user to set the size of the blur region (R3) and the size of the first region (R1) in a linked manner, as the user setting parameter or the user operation.

5. A control method of a light distribution control apparatus (100) controlling light distribution of a headlight (3) irradiating a region in front of a vehicle, the control method comprising:
a region setting step of, by the light distribution control apparatus (100), setting an irradiation control region of the headlight (3) including a first region (R1) including a front vehicle (V) in a front direction of the vehicle and a second region (R2) not including the front vehicle (V) in a periphery of the first region (R1), based on a front captured image (1M) of an on-board camera (1) of the vehicle;
a light intensity setting step of, by the light distribution control apparatus (100), setting a set light intensity of the headlight (3) based on the irradiation control region; and
a lighting control step of, by the light distribution control apparatus (100), controlling the light distribution of the headlight (3) based on the irradiation control region and the set light intensity,
wherein, in the region setting step, a size of a blur region (R3) surrounding the first region (R1) on a first region (R1) side in the second region (R2) is set, based on a user setting parameter or a user operation of a user of the vehicle, and
in the light intensity setting step, a first light intensity of the first region (R1), a second light intensity of the second region (R2) that is higher than the first light intensity, and a third light intensity of the blur region (R3) that increases from the first light intensity to the second light intensity as a distance from the first region (R1) increases are set.

6. A light distribution control program for causing a computer (10) to function as a light distribution control apparatus (100) controlling light distribution of a headlight (3) irradiating a region in front of a vehicle, the light distribution control program causing the computer (10) to function as:
a region setter (11) configured to set an irradiation control region of the headlight (3) including a first region (R1) including a front vehicle (V) in a front direction of the vehicle and a second region (R2) not including the front vehicle (V) in a periphery of the first region (R1), based on a front captured image (IM) of an on-board camera (1) of the vehicle;
a light intensity setter (12) configured to set a set light intensity of the headlight (3) based on the irradiation control region; and
a lighting controller (13) configured to control the light distribution of the headlight (3) based on the irradiation control region and the set light intensity,
wherein the region setter (11) is configured to set a size of a blur region (R3) surrounding the first region (R1) on a first region (R1) side in the second region (R2), based on a user setting parameter or a user operation of a user of the vehicle, and
the light intensity setter (12) is configured to set a first light intensity of the first region (R1), a second light intensity of the second region (R2) that is higher than the first light intensity, and a third light intensity of the blur region (R3) that increases from the first light intensity to the second light intensity as a distance from the first region (R1) increases.
